# EUROPEAN PATENT APPLICATION

(11) **EP 4 632 502 A1**
(43) Date of publication of application: **15.10.2025**
(21) Application number: 24769718.8
(22) Date of filing: 21.02.2024
(51) Int. Cl.: G04G 17/08, G04G 17/04, G04G 17/06, H01Q 1/27

(54) **ELECTRONIC DEVICE**

(30) Priority: 13.03.2023 CN 202310241761
(71) Applicant: Huawei Technologies Co., Ltd., Shenzhen, Guangdong 518129 (CN)
(72) Inventor: ZHANG, Kemin, Shenzhen, Guangdong 518129 (CN); YANG, Wenjian, Shenzhen, Guangdong 518129 (CN); LIU, Zhuang, Shenzhen, Guangdong 518129 (CN); LIN, Nan, Shenzhen, Guangdong 518129 (CN); YOU, Xiangeng, Shenzhen, Guangdong 518129 (CN); ZHU, Peipei, Shenzhen, Guangdong 518129 (CN)
(74) Representative: Gill Jennings & Every LLP
(86) International application number: PCT/CN2024/077888
(87) International publication number: WO 2024/188023

(57) **Abstract**

An electronic device (10000) is provided and includes a panel assembly (100), a middle frame assembly (200), and a bottom case assembly (500). The panel assembly (100) and the bottom case assembly (500) are respectively located at a top end and a bottom end of the middle frame assembly (200), an accommodation cavity (700) is formed between the panel assembly (100), the middle frame assembly (200), and the bottom case assembly (500), and a battery assembly (300) and a control assembly (400) are disposed in the accommodation cavity (700). The middle frame assembly (200) includes an appearance layer (210) and a structure layer (220). The appearance layer (210) is a metal appearance layer, the appearance layer (210) includes an annular wall structure (210a) that extends in a thickness direction of the middle frame assembly (200), and at least one connection portion (211) that extends toward the inside of the accommodation cavity (700) is disposed on an inner wall of the appearance layer (210). The structure layer (220) is an insulating structure layer, the structure layer (220) is disposed on the inner wall of the appearance layer (210), and the battery assembly (300) is fastened to the structure layer (220). A mounting portion (221) that fits with the connection portion (211) is disposed on the structure layer (220), one end of the connection portion (211) penetrates into the mounting portion (221), and the other end is exposed from the mounting portion (221). A circuit board (410) of the control assembly (400) is fastened and electrically connected to a part that is of the connection portion (211) and that is exposed from the mounting portion (221). **In** this way, the electronic device (10000) has a good appearance and texture, and has good multi-band antenna performance.

## Description

This application claims priority to Chinese Patent Application No. 202310241761.5, filed with the China National Intellectual Property Administration on March 13, 2023 and entitled "ELECTRONIC DEVICE", which is incorporated herein by reference in its entirety.

### TECHNICAL FIELD

Embodiments of this application relate to the field of electronic device technologies, and in particular, to an electronic device.

### BACKGROUND

With continuous development of electronic devices (such as mobile phones or smartwatches), the electronic devices are increasingly popular among users due to portability and intelligence of the electronic devices. However, antenna performance improvement of an electronic device that can implement a smart call, especially the smartwatch, is always a challenge in the industry.

In a related technology, watch cases of most smartwatches are metal watch cases, and the metal watch case is an antenna structure of the smartwatch. To achieve integrated effect for an appearance of the smartwatch, the metal watch case is usually designed as a seamless structure. However, because signal frequency bands of different components (for example, GPS, Bluetooth, and Wi-Fi) are different, such design affects performance of multi-band antennas such as GPS, Bluetooth, and Wi-Fi of a product. To resolve a problem that the antenna performance is affected after a seamless metal case is used for the smartwatch, in the related technology, the case of the smartwatch is configured as a plastic watch case, and a metal antenna pattern is directly formed on the plastic watch case by using a laser direct structuring (Laser Direct Structuring, LDS) technology.

However, the plastic watch case has poor appearance effect and texture, and is obviously inferior to the metal watch case.

### SUMMARY

Embodiments of this application provide an electronic device. The electronic device has good appearance effect and texture, and has good multi-band antenna performance.

According to a first aspect, an embodiment of this application provides an electronic device. The electronic device includes a panel assembly, a middle frame assembly, and a bottom case assembly. The panel assembly and the bottom case assembly are respectively disposed at a top end and a bottom end of the middle frame assembly, an accommodation cavity is formed between the panel assembly, the middle frame assembly, and the bottom case assembly, and a battery assembly and a control assembly are disposed in the accommodation cavity. The middle frame assembly includes an appearance layer and a structure layer. The appearance layer is a metal appearance layer, the appearance layer includes an annular wall structure that extends in a thickness direction of the middle frame assembly, and at least one connection portion that extends toward the inside of the accommodation cavity is disposed on an inner wall of the appearance layer. The structure layer is an insulating structure layer, the structure layer includes an annular wall disposed around the inner wall of the appearance layer, and the battery assembly is fastened to the structure layer. A mounting portion that fits with the connection portion is disposed on the structure layer, one end of the connection portion penetrates into the mounting portion, and the other end is exposed from the mounting portion. The control assembly includes a circuit board, and the circuit board is fastened and electrically connected to a part that is of the connection portion and that is exposed from the mounting portion.

According to the electronic device provided in this embodiment of this application, the connection portion is disposed on the inner wall of the appearance layer, and the connection portion is electrically connected to the circuit board of the control assembly, so that a current on the circuit board can be guided into the appearance layer, and the appearance layer can be used as an antenna radiator of the electronic device. The appearance layer is disposed as the metal appearance layer, and the structure layer is disposed as the insulating structure layer, so that it can be ensured that appearance effect and texture of the middle frame assembly is good. The structure layer is disposed on the inner wall of the appearance layer, so that the metal appearance layer can be isolated from the metal component of the battery assembly and the control assembly of the electronic device, to meet a clearance requirement of an antenna when the appearance layer is used as the antenna radiator, so that impact of a metal component in the accommodation cavity on antenna performance is reduced, and the antenna performance of the electronic device is improved.

In a possible implementation, the structure layer is formed on the inner wall of the appearance layer by using a nano molding technology, and a first waterproof interface is formed between injection molding connection surfaces of the structure layer and the appearance layer.

The structure layer is formed on the inner wall of the appearance layer by using the nano molding technology, so that a dense waterproof path can be formed between the structure layer and the appearance layer. Therefore, a waterproof feature of the electronic device is improved. The structure layer is injected onto the appearance layer by using the nano molding technology, so that a waterproof interface between the appearance layer and the structure layer can be minimized, a process can be simplified, and waterproof performance can be improved.

In a possible implementation, a first groove is provided between a partial structure of the connection portion and the mounting portion on a side that is of the connection portion and that is exposed from the mounting portion. A first sealing member is disposed in the first groove, the first sealing member is connected to the first groove in a sealed manner, and a second waterproof interface is formed between the first sealing member and the first groove.

The first groove is provided, and the first sealing member is disposed in the first groove, so that the second waterproof interface is formed between connection surfaces of the first sealing member and the first groove. Therefore, the second waterproof interface can prevent liquid such as water from entering a device body after penetrating through the first waterproof interface, and the waterproof performance of the electronic device can be improved.

In a possible implementation, the first sealing member is of an annular structure formed in the first groove by using a dispensing process. Alternatively, the first sealing member is of an annular sealing ring structure, and the annular sealing ring structure is in interference fit with the first groove.

The first sealing member is disposed as the annular structure formed by using the dispensing process, so that disposition is facilitated, and sealing performance between the appearance layer and the structure layer can be improved. The first sealing member is of the annular sealing ring structure, so that assembly is simple, costs are low, and processing costs can be reduced.

In a possible implementation, the connection portion includes a first connection segment and a second connection segment. One end of the first connection segment is connected to the inner wall of the appearance layer, and the other end extends toward the inside of the appearance layer. One end of the second connection segment is connected to an end that is of the first connection segment and that is away from the appearance layer, and the other end extends away from the first connection segment in a thickness direction of the appearance layer.

The connection portion is disposed as a structure including the first connection segment and the second connection segment, and the first connection segment and the second connection segment are disposed in different directions, so that assembly with the circuit board of the electronic device can be facilitated, assembly difficulty is reduced, and assembly stability is improved.

In a possible implementation, the connection portion is of an L-shaped structure. The first connection segment is perpendicular to the appearance layer, and the first connection segment is perpendicular to the second connection segment.

In a possible implementation, the first connection segment is of a sector structure. A large end of the sector structure is connected to the inner wall of the appearance layer, and a small end of the sector structure is connected to the second connection segment.

The first connection segment is disposed as the sector structure. In comparison with a case in which the first connection segment is disposed as a rectangular structure with a same outer diameter as that of the second connection segment, the sector structure has larger strength. The large end of the sector structure is connected to the inner wall of the appearance layer, so that a connection area between the connection portion and the appearance layer can be increased, and connection strength between the appearance layer and the first connection segment can be increased.

In a possible implementation, the second connection segment is of a hollow column structure.

In a possible implementation, the second connection segment is internally threaded.

The second connection segment is disposed as the hollow column structure, so that subsequent assembly with the circuit board can be facilitated. The second connection segment is internally threaded, so that connection stability between the circuit board and the second connection segment can be improved.

In a possible implementation, a central angle corresponding to the sector structure ranges from 30° to 60°, and a thickness of the sector structure is greater than or equal to 0.5 mm.

In a possible implementation, the mounting portion includes a mounting cavity, and the mounting cavity includes a first cavity and a second cavity that communicate with each other. The first connection segment is located in the first cavity, and is connected to the first cavity in a sealed manner. The second cavity is a stepped cylindrical cavity. A large end of the stepped cylindrical cavity is located at an end that is of the second cavity and that is away from the first cavity, and a partial structure of the second connection segment passes through a small end of the stepped cylindrical cavity, and is connected to the small end of the stepped cylindrical cavity in a sealed manner. The other partial structure of the second connection segment is located at the large end of the stepped cylindrical cavity, and the first groove is formed between the other partial structure of the second connection segment and the large end of the stepped cylindrical cavity. The first sealing member is disposed in the first groove, and the first sealing member is connected to the first groove in a sealed manner.

The mounting cavity is disposed in the mounting portion to accommodate and wrap the connection portion, so that a sealed connection between the connection portion and the mounting portion is ensured. The first groove is provided between the mounting portion and the connection portion, to provide a mounting position for the first sealing member. In this way, after the first sealing member is disposed in the first groove, it can be ensured that a connection between the connection portion and the mounting portion is in a sealed state. Therefore, waterproof effect is improved.

In a possible implementation, the circuit board is located on a surface that is of the connection portion and that is exposed from the mounting portion, the circuit board is provided with a through hole that fits with the connection portion, and the part that is of the connection portion and that is exposed from the mounting portion passes through the through hole, so that a surface that is of the circuit board and that is close to the mounting portion abuts against the mounting portion. The electronic device further includes a first connection assembly, where the first connection assembly includes a spring and a fastener, and both the fastener and the spring are of metal structures. One end of the fastener passes through the spring and is fastened to the second connection segment of the connection portion, so that one end of the spring abuts against the circuit board, and a surface that is of the other end and that faces the connection member abuts against the connection member, and the spring is fastened between the connection portion and the fastener.

The first connection assembly is disposed, so that the circuit board is electrically connected to the connection portion, and an electrical signal on the circuit board is transferred to the appearance layer. Therefore, the appearance layer can implement signal conduction.

In a possible implementation, the spring is of a bowl-shaped structure. The spring includes a side wall and a bottom wall, the side wall surrounds an outer side of the bottom wall, and the bottom wall is provided with a through hole for the fastener to be inserted into. A plurality of bumps are provided on a surface that is of the bottom wall and that is close to the side wall, and the bumps are electrically connected to the connection portion.

The bumps are provided, to ensure that the spring can be electrically connected to the connection portion stably.

In a possible implementation, a conductive layer is disposed on a surface of the bump, and the conductive layer is gold-plated or silver-plated.

The conductive layer is disposed on the surface of the bump, so that conductive efficiency between the spring and the connection portion can be increased. Therefore, performance of the appearance layer as the antenna radiator can be improved.

In a possible implementation, there are a plurality of connection portions. The plurality of connection portions are spaced apart around circumference of the appearance layer. The connection portion corresponds to the mounting portion.

The plurality of connection portions are disposed, so that connection positions between the appearance layer and the circuit board can be increased. Therefore, connection stability between the circuit board and the appearance layer can be improved, and maintenance costs can be reduced.

In a possible implementation, the appearance layer includes an antenna radiator of the electronic device. The structure layer is located between the antenna radiator and the accommodation cavity, and the structure layer is configured to provide antenna clearance for the antenna radiator.

The structure layer is disposed between the appearance layer and the accommodation cavity. This helps provide the clearance for the antenna, to prevent a metal component inside the electronic device from interfering with the antenna.

In a possible implementation, in the thickness direction of the middle frame assembly, at least one gap structure is provided at a top end or a bottom end of the appearance layer. The at least one gap structure is spaced apart around the circumference of the appearance layer.

The gap structure is provided at the top end or the bottom end of the appearance layer, so that the appearance layer can be divided into segments. In this way, the antenna radiator (the appearance layer) can carry different signal frequency bands of different components (for example, a GPS, Bluetooth, Wi-Fi, and 4G), so that communication quality of the electronic device is optimized.

In a possible implementation, the appearance layer is formed through forging, casting, or die casting.

The appearance layer is directly formed through die casting, and then the structure layer is directly injected onto the inner wall of the appearance layer through NMT injection molding. In this way, the appearance layer can be fastened to the structure layer, and a partial structure of the appearance layer can be embedded into the structure layer, so that firmness of the connection between the appearance layer and the structure layer is improved. In addition, the appearance layer is formed through forging, casting, or die casting, so that a large amount of time for computerized numerical control machining (Computerized Numerical Control Machining, CNC) can be reduced, and processing costs can be greatly reduced.

In a possible implementation, a plurality of pulling-resisted bonding structures are disposed on the inner wall of the appearance layer. The pulling-resisted bonding structure is of a hole-type pulling-resisted bonding structure or a groove-type pulling-resisted bonding structure.

The plurality of pulling-resisted bonding structure is disposed, so that deformation of the appearance layer and the structure layer during NMT injection molding can be reduced. In addition, a contact path between the appearance layer and the structure layer in the thickness direction of the middle frame assembly can be extended. In other words, a waterproof path between the appearance layer and the structure layer is extended, so that waterproof effect of the middle frame assembly can be improved.

### BRIEF DESCRIPTION OF DRAWINGS

FIG. 1 is a diagram of a structure of an electronic device according to an embodiment of this application;
FIG. 2 is a schematic exploded view of a structure of a device body of an electronic device according to an embodiment of this application;
FIG. 3 is a diagram of a structure of a middle frame assembly of a device body of an electronic device according to an embodiment of this application;
FIG. 4 is a schematic exploded view of a structure of a middle frame assembly of a device body of an electronic device according to an embodiment of this application;
FIG. 5 is a diagram of a partial structure of a middle frame assembly of a device body of an electronic device according to an embodiment of this application;
FIG. 6 is a diagram of a structure of an appearance layer of a middle frame assembly of a device body of an electronic device according to an embodiment of this application;
FIG. 7 is a diagram of another structure of an appearance layer of a middle frame assembly of a device body of an electronic device according to an embodiment of this application;
FIG. 8 is a diagram of a structure of an appearance layer of a middle frame assembly of a device body of an electronic device according to an embodiment of this application from another angle;
FIG. 9 is a diagram of a structure of an appearance layer of a middle frame assembly of a device body of an electronic device according to an embodiment of this application from another angle;
FIG. 10 is a diagram of a structure of an appearance layer of a middle frame assembly of a device body of an electronic device according to an embodiment of this application from another angle;
FIG. 11 is a schematic enlarged view of a part A in FIG. 9;
FIG. 12 is a diagram of a cross-sectional structure of an appearance layer of a middle frame assembly of a device body of an electronic device according to an embodiment of this application;
FIG. 13 is a diagram of a structure of a structure layer of a middle frame assembly of a device body of an electronic device according to an embodiment of this application;
FIG. 14 is a diagram of a cross-sectional structure of a structure layer of a middle frame assembly of a device body of an electronic device according to an embodiment of this application;
FIG. 15 is a diagram of another cross-sectional structure of a structure layer of a middle frame assembly of a device body of an electronic device according to an embodiment of this application;
FIG. 16 is a diagram of a cross-sectional structure of a middle frame assembly of a device body of an electronic device according to an embodiment of this application;
FIG. 17 is a diagram of a partial cross-sectional structure of a device body of an electronic device according to an embodiment of this application;
FIG. 18 is a diagram of a structure of a spring in a first connection assembly of a device body of an electronic device according to an embodiment of this application;
FIG. 19 is a diagram of a cross-sectional structure of a spring in a first connection assembly of a device body of an electronic device according to an embodiment of this application;
FIG. 20 is a diagram of a cross-sectional structure of a device body of an electronic device according to an embodiment of this application;
FIG. 21 is a diagram of another cross-sectional structure of a device body of an electronic device according to an embodiment of this application;
FIG. 22 is a diagram of a partial cross-sectional structure of a device body of an electronic device according to an embodiment of this application; and
FIG. 23 is a diagram of a partial cross-sectional structure along D-D in FIG. 21.

Reference numerals:
10000: electronic device; 1000: device body; 2000: watch strap; 3000: button assembly;
3100: crown spring; 100: panel assembly; 110: display panel; 120: bezel;
200: middle frame assembly; 210: appearance layer; 210a: wall structure; 211: connection portion;
2111: first connection segment; 2112: second connection segment; 212: gap structure;
213: first pulling-resisted bonding structure; 214: second pulling-resisted bonding structure; 215: third pulling-resisted bonding structure;
2151: open-sided hole; 2152: third groove; 216: assembly hole;
220: structure layer; 220a: annular wall; 221: mounting portion; 2211: first groove;
2212: mounting cavity; 22121: first cavity; 22122: second cavity;
222: second groove; 223: inner edge; 224: assembly structure;
224a: hole-shaped structure; 224b: groove-shaped structure; 224c: annular wall structure;
230: first sealing member; 240: second sealing member;
300: battery assembly; 310: battery body; 320: battery bracket;
400: control assembly; 410: circuit board; 500: bottom case assembly;
610: first connection assembly; 611: spring; 6111: bump; 6112: bottom wall;
6113: side wall; 6114: flange; 6115: through hole; 612: fastener; 620: second connection assembly; 700: accommodation cavity.

### DESCRIPTION OF EMBODIMENTS

Terms used in embodiments of this application are merely used to explain specific embodiments of this application, but are not intended to limit this application.

Unless otherwise required in the context, throughout this specification and claims, the term "include (comprise)" and other forms of the term, for example, a third person singular form "includes (comprises)" and a present participle form "including (comprising)" are interpreted as "open and inclusive", that is, "include (comprise) but not limited to". In descriptions of this specification, terms such as "one embodiment (one embodiment)", "some embodiments (some embodiments)", "example embodiments (exemplary embodiments)", "example (example)", or "some examples (some examples)" are intended to indicate that specific features, structures, materials, or characteristics related to embodiments or examples are included in at least one embodiment or example of the present disclosure. The schematic representations of the foregoing terms do not necessarily refer to a same embodiment or example. In addition, the particular features, structures, materials, or characteristics may be included in any one or more embodiments or examples in any appropriate manner.

Moreover, in this application, position terms such as "front" and "behind" are defined relative to illustrative positions of components in the accompanying drawings. It should be understood that these direction terms are relative concepts and are used for relative description and clarification, and may vary accordingly based on a position change in which the components are placed in the accompanying drawings.

In embodiments of this application, the term "and/or" describes merely an association relationship between associated objects and indicates that three relationships may exist. For example, A and/or B may indicate the following three cases: Only A exists, both A and B exist, and only B exists. In addition, the character "/" in this specification generally indicates an "or" relationship between the associated objects.

Embodiments of this application provide an electronic device. A middle frame assembly is designed to form a structure including a metal appearance layer and an insulating structure layer, so that performance of an antenna of the electronic device can be improved, and appearance effect and texture are good.

The electronic device provided in embodiments of this application includes but is not limited to a mobile or fixed terminal that has a communication function, such as a mobile phone, a headset, a tablet computer, a notebook computer, an ultra-mobile personal computer (ultra-mobile personal computer, UMPC), a handheld computer, an intercom, a netbook, a personal digital assistant (personal digital assistant, PDA), a dashboard camera, a wearable device (such as a smartwatch or a smart headset), a virtual reality device, a Bluetooth speaker, a smart speaker, or a vehicle-mounted pre-installed device.

In this embodiment, an example in which the smartwatch is the foregoing electronic device is used for description.

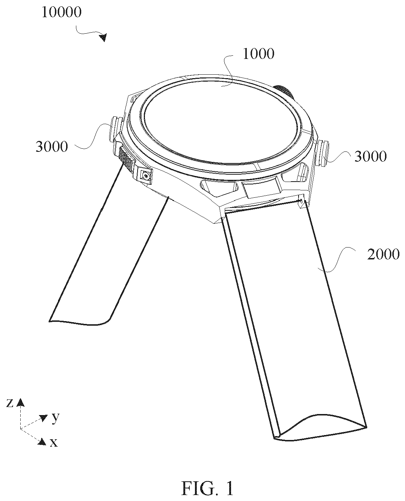

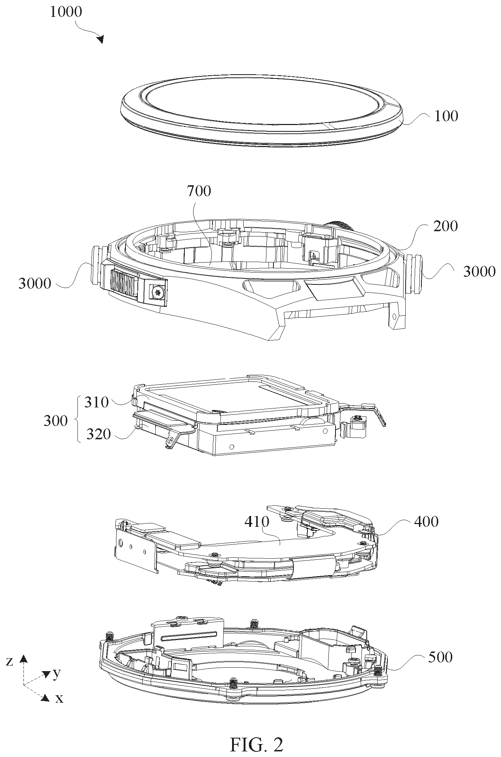

FIG. 1 is a diagram of a structure of an electronic device according to an embodiment of this application. FIG. 2 is a schematic exploded view of a structure of a device body of the electronic device according to an embodiment of this application. Refer to FIG. 1 and FIG. 2. The electronic device 10000 may include the device body 1000 and a watch strap 2000. The watch strap 2000 is rotatably disposed at two ends of the device body 1000 to facilitate wearing. FIG. 1 shows only a partial structure of the watch strap 2000, and a shape of the watch strap 2000 is not further limited in this embodiment of this application.

As shown in FIG. 2, the device body 1000 of the electronic device 10000 may include a panel assembly 100, a middle frame assembly 200, a battery assembly 300, a control assembly 400, and a bottom case assembly 500. The panel assembly 100 and the bottom case assembly 500 are respectively disposed at a top end and a bottom end of the middle frame assembly 200, so that an accommodation cavity 700 is formed between the panel assembly 100, the middle frame assembly 200, and the bottom case assembly 500. The accommodation cavity 700 may be configured to accommodate the battery assembly 300, the control assembly 400, and the like. The battery assembly 300 may be configured to provide electric energy for partial structures of the panel assembly 100 and the control assembly 400. The control assembly 400 may be configured to control the electronic device 10000 to achieve different functions of the electronic device 10000.

In this embodiment of this application, the panel assembly 100 may include a bezel 120 and a display panel 110. The bezel 120 may be connected, in a sealed manner, to an end that is of the middle frame assembly 200 and that is close to the panel assembly 100, and the bezel 120 is connected to the display panel 110 in a sealed manner. The control assembly 400 includes at least a circuit board 410. The circuit board 410 is securely disposed on the middle frame assembly 200. A partial structure of the middle frame assembly 200 is an antenna radiator. The circuit board 410 is electrically connected to the antenna radiator on the middle frame assembly 200, so that the antenna radiator can implement signal conduction. The battery assembly 300 may include a battery body 310 and a battery bracket 320. The battery body 310 may be fastened to the middle frame assembly 200 by using the battery bracket 320.

The panel assembly 100 is fastened to the middle frame assembly 200, the bottom case assembly 500 is fastened to the middle frame assembly 200, and both the panel assembly 100 and the bottom case assembly 500 are connected to the middle frame assembly 200 in a sealed manner, so that waterproof performance of the electronic device 10000 can be improved.

In this embodiment, manners of fastening and sealing between both the panel assembly 100 and the bottom case assembly 500 and the middle frame assembly 200 are not further limited. For example, fastening between both the panel assembly 100 and the bottom case assembly 500 and the middle frame assembly 200 may be implemented, for example, by using a fastener 612, an interference fit connection, and a buckling connection, and the sealing connection between both the panel assembly 100 and the bottom case assembly 500 and the middle frame assembly 200 may be implemented, for example, through an interference fit and by disposing a sealing ring or sealing adhesive. A manner of connecting the panel assembly 100 to the middle frame assembly 200 and a manner of connecting the bottom case assembly 500 to the middle frame assembly 200 are not further limited in this embodiment of this application.

In some embodiments, a plurality of button assemblies 3000 may be further disposed on an outer side of the device body 1000. The button assembly 3000 may be configured to adjust a mode of the electronic device 10000 and the like. For example, the button assembly 3000 is movably disposed on an outer side of the middle frame assembly 200, and a partial structure of the button assembly 3000 may rotate or slide relative to the middle frame assembly 200. In this embodiment of this application, a connection relationship between the button assembly 3000 and the middle frame assembly 200 and a connection relationship between the button assembly 3000 and the control assembly 400 are not further limited, provided that the button assembly 3000 can be disposed on the device body 1000 and can be configured to adjust a function of the electronic device 10000. In addition, an external shape of the button assembly 3000 is not further limited, provided that a function of the button assembly 3000 can be achieved.

The following describes, in detail, the middle frame assembly 200 of the electronic device 10000 with reference to the accompanying drawings.

For ease of description, in this embodiment of this application, a side on which the panel assembly 100 is disposed on the device body 1000 of the electronic device 10000 is used as a front side of the electronic device 10000, the device body 1000, and the middle frame assembly 200, and a side on which the bottom case assembly 500 is disposed on the device body 1000 of the electronic device 10000 is used as a rear side of the electronic device 10000, the device body 1000, and the middle frame assembly 200. A side that is of the middle frame assembly 200 and that faces a central axis of the device body 1000 is used as an inner side of the middle frame assembly 200, and a side that is of the middle frame assembly 200 and that is away from the central axis of the device body 1000 is used as the outer side of the middle frame assembly 200.

Az direction in the figure is a thickness direction of the electronic device and the middle frame assembly, and is also a direction of a central axis of the electronic device or the middle frame assembly.

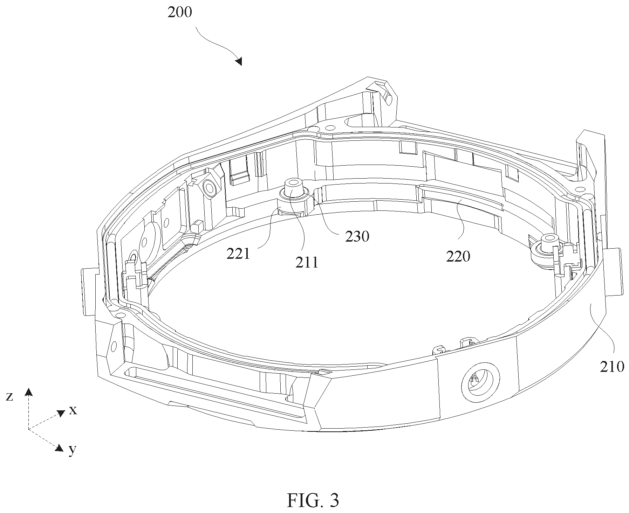

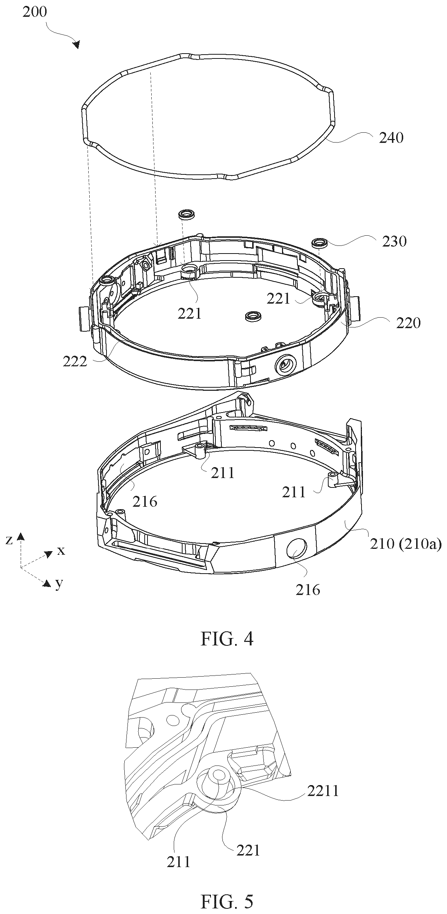

FIG. 3 is a diagram of a structure of the middle frame assembly of the device body of the electronic device according to an embodiment of this application. FIG. 4 is a schematic exploded view of a structure of the middle frame assembly of the device body of the electronic device according to an embodiment of this application. FIG. 3 and FIG. 4 are both diagrams of structures of the rear side of the middle frame assembly 200.

As shown in FIG. 3, in this embodiment of this application, the middle frame assembly 200 may include an appearance layer 210 and a structure layer 220. The appearance layer 210 is located on the outer side of the middle frame assembly 200, the structure layer 220 is located on the inner side of the middle frame assembly 200, and the appearance layer 210 is fastened to the structure layer 220. For example, at least an inner wall of the appearance layer 210 is fastened to an outer wall of the structure layer 220. Both inner walls of the appearance layer 210 and the structure layer 220 face the inner side of the middle frame assembly 200, and both outer walls of the appearance layer 210 and the structure layer 220 face the outer side of the middle frame assembly 200.

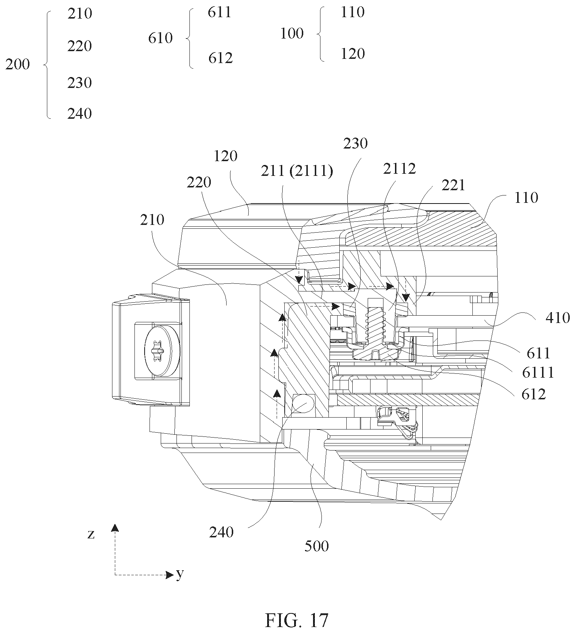

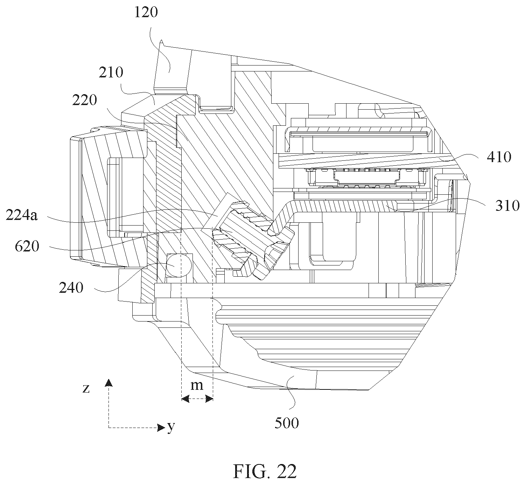

In some embodiments, the appearance layer 210 is a metal appearance layer, the appearance layer 210 includes an annular wall structure 210a that extends in the thickness direction (z direction) of the middle frame assembly, and at least one connection portion 211 that extends toward the inside of the accommodation cavity 700 (as shown in FIG. 2) is disposed on the inner wall of the appearance layer 210. The structure layer 220 is an insulating structure layer, the structure layer 220 includes an annular wall 220a disposed around the inner wall of the appearance layer, and the battery assembly 300 is fastened to the structure layer 220 (as shown in FIG. 22). A mounting portion 221 that fits with the connection portion 211 is disposed on the structure layer 220, one end of the connection portion 211 penetrates into the mounting portion 221, and the other end is exposed from the mounting portion 221. The control assembly 400 includes the circuit board 410, and the circuit board 410 is fastened and electrically connected to a part that is of the connection portion 211 and that is exposed from the mounting portion 221 (as shown in FIG. 17). "Fastened and electrically connected" means that two components are fastened and can be electrically conducted.

For example, the appearance layer 210 may be processed by using a forging, casting, or die casting process, and the structure layer 220 may be directly formed on the inner wall of the appearance layer 210 by using a nano molding technology (Nano Molding Technology, NMT), so that a sealed first waterproof interface is formed between the appearance layer 210 and the structure layer 220, and the waterproof performance of the electronic device is improved. The appearance layer 210 is directly formed through die casting, and then the structure layer 220 is directly injected onto the inner wall of the appearance layer 210 through NMT injection molding. In this way, the appearance layer 210 can be fastened to the structure layer 220, and a partial structure of the appearance layer 210 can be embedded into the structure layer 220, so that firmness of the connection between the appearance layer 210 and the structure layer 220 is improved. In addition, a time for computerized numerical control machining (Computerized Numerical Control Machining, CNC) can be greatly reduced, and processing costs can be greatly reduced.

In some embodiments, a material of the appearance layer 210 may be a metal material. The metal material includes but is not limited to an amorphous alloy, stainless steel, a titanium alloy, an aluminum alloy, and the like. The structure layer 220 may be made of an insulating plastic polymer material. A material of the structure layer 220 includes but is not limited to nylon, polyamide (Polyamide, PA), PA+glass fiber, polybutylene terephthalate (Polybutylene terephthalate, PBT), and the like. Certainly, in another embodiment, the materials of the appearance layer 210 and the structure layer 220 may alternatively be other substances. Specific materials of the appearance layer 210 and the structure layer 220 are not further limited in this embodiment of this application.

As shown in FIG. 4, the middle frame assembly 200 provided in this embodiment of this application may further include a first sealing member 230 and a second sealing member 240. The first sealing member 230 may be disposed between the appearance layer 210 and the structure layer 220. A first groove 2211 (as shown in FIG. 5) configured to accommodate the first sealing member 230 is formed between the appearance layer 210 and the structure layer 220, and the first sealing member 230 is disposed in the first groove 2211. The first sealing member 230 may be configured to seal a connection between the structure layer 220 and the appearance layer 210, and a second waterproof interface is formed between connection surfaces of the first sealing member 230 and the first groove 2211, to prevent liquid from entering the accommodation cavity of the device body 1000 through a gap at the connection between the appearance layer 210 and the structure layer 220. Therefore, the waterproof performance of the electronic device 10000 is improved.

The second sealing member 240 may be disposed at an end that is of the structure layer 220 and that is close to the bottom case assembly 500. A second groove 222 (as shown in FIG. 4) configured to accommodate the second sealing member 240 is provided on a surface that is of the structure layer 220 and that faces the bottom case assembly 500, and the second sealing member 240 may be disposed in the second groove 222. The second sealing member 240 may be configured to seal a connection between the middle frame assembly 200 and the bottom case assembly 500, so that the middle frame assembly 200 can be connected to the bottom case assembly 500 in a sealed manner. Therefore, waterproof performance between the middle frame assembly 200 and the bottom case assembly 500 is improved.

In some embodiments, both the first sealing member 230 and the second sealing member 240 may be annular sealing rings formed by using a dispensing process, or may be annular sealing ring structures made of a material such as plastic, rubber, or silicone. For example, the first sealing member 230 may be a rubber sealing ring, and the first sealing member 230 is in interference fit with the first groove 2211. For example, during connection, the first sealing member 230 may be pressed into the first groove 2211 under pressure of the circuit board 410 of the control assembly 400 on the first connection assembly 610, to form the second waterproof interface between the connection surfaces of the first sealing member 230 and the first groove 2211.

In this way, the first sealing member 230 is disposed between the connection portion 211 of the appearance layer 210 and the mounting portion 221 of the structure layer 220, so that the second waterproof interface can prevent liquid such as water from entering the accommodation cavity of the device body 1000 after passing through the first waterproof interface, to prevent affecting normal running of the device body 1000, and improve the waterproof performance of the electronic device 10000.

The second sealing member 240 may be an annular sealing ring formed by using the dispensing process. For example, the second sealing member 240 may be of an annular sealing ring structure shown in FIG. 4, and the second sealing ring may be in interference fit with the second groove 222.

In this embodiment of this application, materials, shapes, and molding processes of the first sealing member 230 and the second sealing member 240 are not further limited, provided that sealing functions of the first sealing member 230 and the second sealing member 240 can be realized.

With reference to FIG. 3, FIG. 4, and FIG. 5, the appearance layer 210 is disposed in the thickness direction (z direction) of the middle frame assembly 200, and the appearance layer 210 includes the annular wall structure 210a. A surface that is of the wall structure 210a and that faces the central axis of the middle frame assembly 200 is the inner wall of the appearance layer 210, and a surface that is of the wall structure 210a and that is away from the central axis of the middle frame assembly 200 is the outer wall of the appearance layer 210. A plurality of assembly holes 216 configured to mount the button assembly 3000 or another accessory may be provided on the inner wall of the appearance layer 210. These assembly holes 216 may be of circular through hole-type structures, or may be of rectangular through hole-type structures. Specific shapes, sizes, and positions of these assembly holes 216 are not further limited.

In some embodiments, the connection portion 211 is disposed on the inner wall of the appearance layer 210, one end of the connection portion 211 is connected to the inner wall of the appearance layer 210, the other end extends toward the inside of the appearance layer 210, and the mounting portion 221 corresponding to the connection portion 211 is disposed on the inner wall of the structure layer 220. The connection portion 211 is fastened to the mounting portion 221, and a partial structure of the connection portion 211 is exposed from an outer side of the mounting portion 221. The first groove 2211 configured to mount the first sealing member 230 is formed between the connection portion 211 and the mounting portion 221, and the first sealing member 230 may be disposed in the first groove 2211.

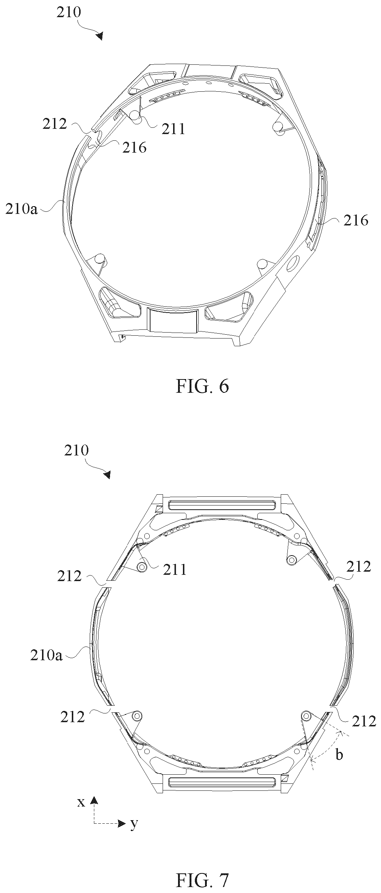

FIG. 6 is a diagram of a structure of the appearance layer of the middle frame assembly of the device body of the electronic device according to an embodiment of this application. FIG. 7 is a diagram of another structure of the appearance layer of the middle frame assembly of the device body of the electronic device according to an embodiment of this application. FIG. 6 is a front view of the appearance layer.

As shown in FIG. 6, in this embodiment of this application, four connection portions 211 are disposed on the inner wall of the appearance layer 210, and the four connection portions 211 are spaced on the inner wall of the appearance layer 210 around the central axis of the appearance layer 210. For example, the four connection portions 211 are centrosymmetrically distributed relative to the central axis of the appearance layer 210. In some embodiments, structures of the four connection portions 211 may be the same, and surfaces that are of the four connection portions 211 and that are close to the panel assembly 100 are located in a same plane. This can facilitate assembly. Certainly, in another embodiment, the structures of the four connection portions 211 may alternatively be set differently. Specific structures may be set based on a specific situation. This is not further limited herein.

It should be noted that there are a plurality of connection portions 211, including but not limited to four connection portions 211. A quantity of connection portions 211 may alternatively be another value, for example, there may be one connection portion 211 or two, three, five, or more connection portions 211. The quantity of connection portions 211 is not limited in this embodiment of this application.

In addition, when there are the plurality of connection portions 211, the plurality of connection portions 211 may be spaced around the central axis of the middle frame assembly 200. For example, the plurality of connection portions 211 may be centrosymmetrically disposed on the inner wall of the appearance layer 210 around the central axis of the middle frame assembly 200, may be evenly disposed on the inner wall of the appearance layer 210 around the central axis of the middle frame assembly 200, or may be unevenly disposed on the inner wall of the appearance layer 210 around the central axis of the middle frame assembly 200. In this embodiment of this application, the quantity of connection portions 211 and a disposition position are not further limited.

In this embodiment of this application, as shown in FIG. 6, a gap structure 212 is disposed on the appearance layer 210. For example, the gap structure 212 is disposed at an end that is of the appearance layer 210 and that faces the panel assembly 100. In some embodiments, the gap structure 212 may be disposed in combination with the assembly hole 216 configured to mount the button assembly 3000. To be specific, the assembly hole 216 is opened and extends on one side or two sides along the direction of the central axis of the middle frame assembly 200, to form the gap structure 212, so that a processing procedure is simplified.

The gap structure 212 is disposed on the appearance layer 210, so that the appearance layer 210 may be divided into segments, for example, one segment, two segments, three segments, four segments, or more segments. In this way, the antenna radiator (the appearance layer 210) can carry different signal frequency bands of different components (for example, a GPS, Bluetooth, Wi-Fi, and 4G), so that communication quality of the electronic device 10000 is optimized.

It should be noted that a quantity of gap structures 212 on the appearance layer 210 is not limited in this embodiment of this application. For example, there may be one gap structure 212 or two, three, four, or more gap structures 212. A specific quantity may be set based on a specific situation. This is not further limited in this embodiment of this application.

For example, as shown in FIG. 7, there are four gap structures 212 on the appearance layer 210, and the four gap structures 212 are spaced on the appearance layer 210. The four gap structures 212 are centrosymmetrically distributed around the central axis of the appearance layer 210, or the four gap structures 212 are evenly distributed around the central axis of the appearance layer 210. Distribution of the gap structures 212 is not further limited in this embodiment of this application.

In addition, a spacing between the gap structures 212 is not further limited in this embodiment of this application, provided that signals of different frequency bands of different components (for example, GPS, Bluetooth, Wi-Fi, and 4G) can be carried.

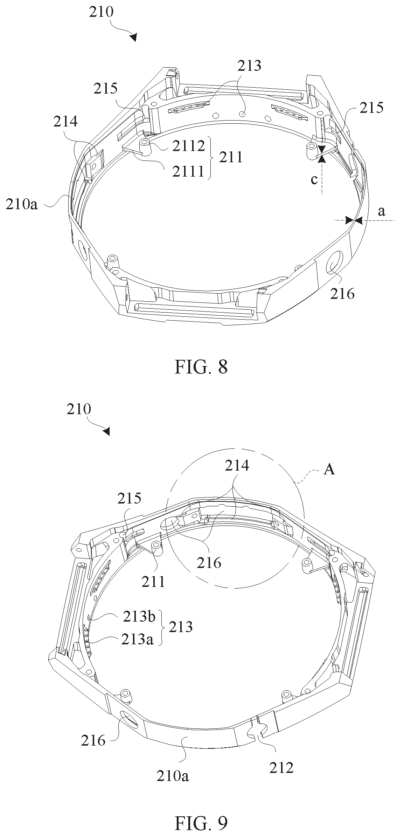

FIG. 8 is a diagram of a structure of the appearance layer 210 of the middle frame assembly 200 of the device body 1000 of the electronic device 10000 according to an embodiment of this application from another angle. FIG. 8 is a rear view of the appearance layer 210.

As shown in FIG. 8, the connection portion 211 may include a first connection segment 2111 and a second connection segment 2112. One end of the first connection segment 2111 is connected to the inner wall of the appearance layer 210, and the other end extends toward the inner side of the middle frame assembly 200. One end of the second connection segment 2112 is connected to an end that is of the first connection segment 2111 and that is away from the appearance layer 210, and the other end extends in a direction parallel to the central axis of the middle frame assembly 200 toward a direction that is away from the first connection segment 2111.

In some embodiments, the first connection segment 2111 of the connection portion 211 and the inner wall of the appearance layer 210 may be perpendicular to each other, and the second connection segment 2112 and the first connection segment 2111 are perpendicular to each other. For example, the connection portion 211 is of an L-shaped structure and is perpendicular to the inner wall of the appearance layer 210. In this way, in comparison with a case in which the connection portion 211 is disposed at an included angle with the inner wall of the appearance layer 210, stress between the first connection segment 2111 and the inner wall of the appearance layer 210 can be reduced, structural strength can be improved, a size of the connection portion 211 can be reduced, and costs can be reduced.

Certainly, in another embodiment, the first connection segment 2111 may alternatively be disposed at an included angle with the inner wall of the appearance layer 210, to adapt to different assembly space. In this embodiment of this application, an angle between the first connection segment 2111 and the inner wall of the appearance layer 210 is not further limited.

For example, the connection portion 211 may be located at the end that is of the appearance layer 210 and that is close to the panel assembly 100. Certainly, in another embodiment, the connection portion 211 may alternatively be disposed at another position. For example, the connection portion 211 may be located at an end that is of the appearance layer 210 and that is close to the bottom case assembly 500. A specific position of the connection portion 211 may be determined based on an installation position of the control assembly 400 in the device body 1000. This is not further limited herein.

In some embodiments, the first connection segment 2111 of the connection portion 211 may be of a sector structure (as shown in FIG. 8). A large end of the sector structure is connected to an inner side of the appearance layer 210, and a small end of the sector structure may be connected to the second connection segment 2112. For example, an angle b (as shown in FIG. 7) of the sector structure may be any angle from 30° to 60°, for example, 30°, 40°, 50°, or 60°. A thickness c of the sector structure may be greater than 0.5 mm, for example, 0.5 mm, 0.6 mm, or 0.7 mm. The angle and the thickness of the sector structure are not further limited. Certainly, in another embodiment, the angle and the thickness of the sector structure may alternatively be set to other values, which may be specifically set based on a size of the electronic device 10000. This is not further limited in this embodiment.

The first connection segment 2111 is disposed as the sector structure. In comparison with a case in which the first connection segment 2111 is disposed as a rectangular structure with a same outer diameter as that of the second connection segment 2112, the sector structure has larger strength. The large end of the sector structure is connected to the inner wall of the appearance layer 210, so that a connection area between the connection portion 211 and the appearance layer 210 can be increased, and connection strength between the appearance layer 210 and the first connection segment 2111 can be increased. When the structure layer 220 is injected onto the appearance layer 210, the connection portion 211 is deformed under an action of gravity of a mold and pressure of injection molding. In this case, the first connection segment 2111 is disposed as the sector structure, to improve strength of the connection portion 211, so that deformation of the connection portion 211 in an injection molding process can be reduced, and structural precision of the structure layer 220 can be improved.

In some embodiments, the second connection segment 2112 may be of a hollow column structure. For example, an inner cavity of the hollow column structure is internally threaded. In this way, connection stability of the connection portion 211 can be improved during assembly. For example, an outer side of the second connection segment 2112 may be of a tapered columnar structure. This may facilitate demolding during processing.

For example, a model of a thread may be M1.0. Certainly, in another embodiment, the model of the thread may alternatively be another value, for example, M1.2, M1.4, or M1.5. In this embodiment of this application, the model of the thread in the hollow column structure is not further limited. The second connection segment 2112 is disposed as the hollow column structure, and the column structure is internally threaded. This may help the connection portion 211 be connected to another component.

It should be noted that the connection portion 211 may be connected to the appearance layer 210 in an integrated molding manner by using a die casting process. Certainly, in another embodiment, the connection portion 211 may be connected to the appearance layer 210, for example, through welding. A manner of connecting the connection portion 211 to the appearance layer 210 is not further limited in this embodiment of this application.

In some embodiments, a wall thickness a (as shown in FIG. 8) of the appearance layer 210 may range from 0.3 mm to 0.5 mm, for example, may be 0.3 mm, 0.4 mm, or 0.5 mm. Certainly, in another embodiment, the wall thickness a of the appearance layer 210 may alternatively be another value, for example, may be 1 mm or 2 mm. In this embodiment of this application, the wall thickness of the appearance layer 210 is not limited.

It should be noted that, because the materials of the appearance layer 210 and the structure layer 220 are different, coefficients of thermal expansion of the appearance layer 210 and the structure layer 220 are different. In this case, when NMT injection molding is performed on the structure layer 220 and the appearance layer 210, there may be internal stress or external stress between the structure layer 220 and the appearance layer 210. As a result, cracking easily occurs between the structure layer 220 and the appearance layer 210. In this embodiment of this application, the connection portion 211 is disposed on the inner side of the appearance layer 210, so that, when the structure layer 220 is disposed on the appearance layer 210 through NMT injection molding, the connection portion 211 may be wrapped by an injection molding material (for example, plastic) of the structure layer 220, to form a surrounding pulling-resisted bonding structure. This facilitates molding of the mold and pulling-resisted bonding of a product, prevents cracking between the appearance layer 210 and the structure layer 220, improves structural strength of the middle frame assembly 200, and can improve waterproof effect between the appearance layer 210 and the structure layer 220.

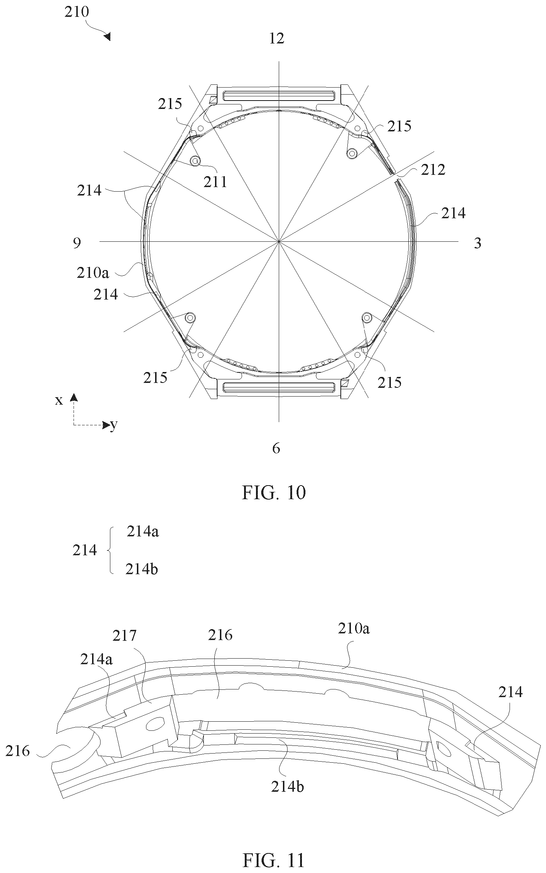

FIG. 9 is a diagram of a structure of the appearance layer of the middle frame assembly of the device body of the electronic device according to an embodiment of this application from another angle. FIG. 10 is a diagram of a structure of the appearance layer of the middle frame assembly of the device body of the electronic device according to an embodiment of this application from another angle. FIG. 9 and FIG. 10 are both diagrams of structures of a rear side of the appearance layer.

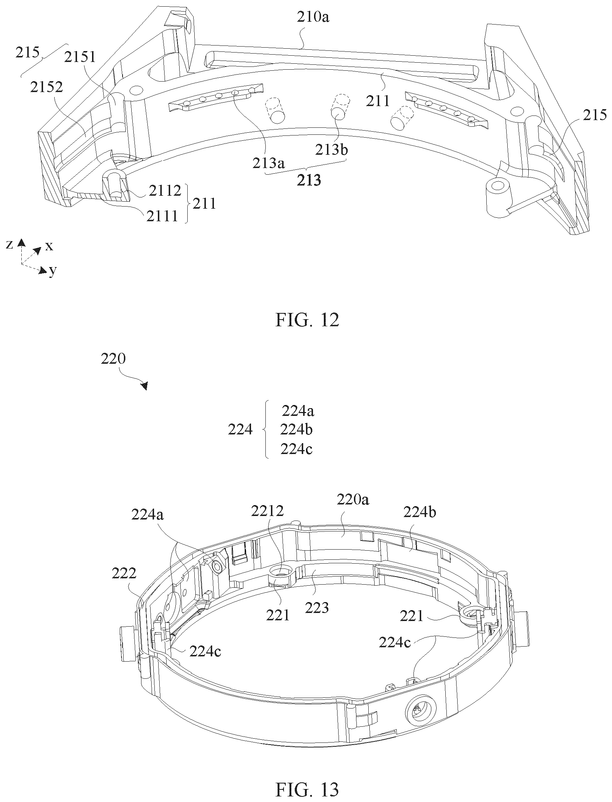

With reference to FIG. 9 and FIG. 10, a plurality of pulling-resisted bonding structures are further disposed on the inner wall of the appearance layer 210. For example, first pulling-resisted bonding structures 213 may be disposed on the inner wall of the appearance layer 210 at positions close to 6 o'clock and 12 o'clock. The first pulling-resisted bonding structure 213 may be of a through hole-type pulling-resisted bonding structure 213a, or may be of a blind hole-type pulling-resisted bonding structure 213b (as shown in FIG. 12). Both first pulling-resisted bonding structures in the two forms are located on the inner wall of the appearance layer 210.

For example, the through hole-type pulling-resisted bonding structure 213a is disposed on a convex wall protruding inward on the inner wall of the appearance layer 210, and a central axis of a through hole is provided in the z direction. In this way, when the structure layer 220 is injected onto the inner wall of the appearance layer 210, the injection molding material may enter the through hole-type pulling-resisted bonding structure 213a, so that a connection area between the appearance layer 210 and the structure layer 220 can be increased. This helps improve connection stability between the appearance layer and the structure layer.

Two through hole-type pulling-resisted bonding structures 213a are disposed at each of positions close to 6 o'clock and 12 o'clock, and are symmetrically disposed by using a connection line between 6 o'clock and 12 o'clock as a symmetry axis. Certainly, in another embodiment, the through hole-type pulling-resisted bonding structure 213a may alternatively be disposed at another position. Therefore, a disposition position and a quantity of the through hole-type pulling-resisted bonding structures 213a are not further limited. In addition, the through hole-type pulling-resisted bonding structure 213a may be formed through laser drilling, or may be formed by using a mold. A forming manner of the through hole-type pulling-resisted bonding structure 213a is not further limited.

In some embodiments, as shown in FIG. 12, the blind hole-type pulling-resisted bonding structure 213b may be disposed in a wall thickness direction (x direction) of the appearance layer 210, and the blind hole-type pulling-resisted bonding structure 213b is inclined upward or downward in the thickness direction (z direction) of the middle frame assembly 200. An example in which the blind hole-type pulling-resisted bonding structure 213b is inclined upward in the z direction in FIG. 12 is used for description. Such blind hole-type pulling-resisted bonding structure 213b inclined in the z direction is disposed. In this way, when the structure layer 220 is injected onto the inner wall of the appearance layer 210, the injection molding material may enter the blind hole-type pulling-resisted bonding structure 213b, and an undercut structure is formed in the inclined blind hole-type structure. In other words, an inner wall of the blind hole-type pulling-resisted bonding structure 213b has a blocking force in both the x direction and a y direction for the injection molding material that enters the hole, so that the structure layer 220 can be effectively prevented from falling off from the appearance layer 210. This helps improve the connection stability between the appearance layer and the structure layer.

In this embodiment of this application, three blind hole-type pulling-resisted bonding structures 213b are disposed at each of the positions close to 6 o'clock and 12 o'clock. Certainly, in another embodiment, a plurality of blind hole-type pulling-resisted bonding structures 213b may alternatively be disposed at other positions. Therefore, a disposition position and a quantity of the blind hole-type pulling-resisted bonding structures 213b are not further limited. In some embodiments, the blind hole-type pulling-resisted bonding structure 213b may be formed through drilling or laser drilling, or certainly may be formed in another manner. In this embodiment of this application, a forming manner of the blind hole-type pulling-resisted bonding structure 213b is not further limited.

With reference to FIG. 9, FIG. 10, and FIG. 11, second pulling-resisted bonding structures 214 may be disposed at positions close to 3 o'clock and 9 o'clock. The second pulling-resisted bonding structure 214 may be of a groove-type pulling-resisted bonding structure. For example, there may be a plurality of second pulling-resisted bonding structures 214, and shapes and sizes of different second pulling-resisted bonding structures 214 may be the same or different. For example, a boss 217 protruding outward is provided on the inner wall of the appearance layer 210, and a groove-shaped structure 214a that is recessed in the direction of the central axis of the appearance layer 210 may be provided at the top or the bottom of the boss 217. A length of the groove-shaped structure 214a along the axial direction of the appearance layer 210 is not further limited in this embodiment of this application, and may be specially set based on a specific situation. When NMT injection molding is performed on the structure layer 220, the groove-shaped structure 214a may implement pulling-resisted bonding, and may further reinforce the appearance layer 210 and the structure layer 220.

In addition, a partial second pulling-resisted bonding structure 214 may be the groove-shaped structure 214b provided in a radial direction of the appearance layer 210. For example, the groove-shaped structure 214b may be provided on one side or two sides of the assembly hole 216 along the direction of the central axis of the appearance layer 210. Certainly, the groove-shaped structure 214b may alternatively be disposed at another position. A disposition position and a quantity of the groove-shaped structures 214b are not further limited in this embodiment of this application, and may be specifically disposed based on a specific situation.

In some embodiments, third pulling-resisted bonding structures 215 may be further disposed on positions between 12 o'clock and 3 o'clock, between 3 o'clock and 6 o'clock, between 6 o'clock and 9 o'clock, and between 9 o'clock and 12 o'clock. For example, the third pulling-resisted bonding structures 215 are disposed at positions of 2 o'clock, 4 o'clock, 8 o'clock, and 10 o'clock. The third pulling-resisted bonding structure 215 may be a pulling-resisted bonding structure with an open-sided hole 2151. As shown in FIG. 12, the third pulling-resisted bonding structure 215 includes the open-sided hole 2151 that extends toward the direction of the central axis of the appearance layer 210 and a third groove 2152 that communicates with the open-sided hole 2151. A partial structure that is of the open-sided hole 2151 and that faces the inner side of the middle frame assembly 200 is of an open structure. The third groove 2152 extends around circumference of the appearance layer 210, and is recessed from the inner wall of the appearance layer 210 to the outer wall of the appearance layer 210, to form a groove-shaped structure.

In this embodiment of this application, neither a length of the third groove 2152 extending around the circumference of the appearance layer 210 nor a depth of recession of the third groove 2152 is further limited, and may be specifically set based on a specific situation. In addition, a disposition location and a quantity of the third pulling-resisted bonding structures 215 are not further limited in this embodiment of this application.

In this embodiment of this application, the plurality of pulling-resisted bonding structures are disposed, so that deformation of the appearance layer 210 and the structure layer 220 during NMT injection molding can be reduced. In addition, a contact path between the appearance layer 210 and the structure layer 220 in the thickness direction of the middle frame assembly 200 can be extended. In other words, a waterproof path between the appearance layer 210 and the structure layer 220 is extended, so that waterproof effect of the middle frame assembly 200 can be improved.

The following describes preparation processes of the appearance layer 210 and the structure layer 220.

First, forging or casting may be performed on the appearance layer 210, and then CNC machining, inner surface sandblasting, external T treatment, and nut insertion are sequentially performed on the appearance layer 210. Then, a nano molding technology is performed on the inner wall of the appearance layer 210, and then stress relief annealing, hot melt nut, plastic CNC machining, and surface processing are sequentially performed on a component obtained by using the nano molding technology.

In a process of performing forging or casting on the appearance layer 210, net shaping or near-net shaping of the metal appearance layer 210 can be directly implemented. This reduces a large amount of CNC machining time in comparison with a conventional block aluminum alloy NMT injection molding solution.

In a process of performing inner surface sandblasting on the appearance layer 210, because sandblasting is performed before T treatment, a micro surface area of an inner surface of the appearance layer 210 may be increased, so that a contact area between the injection molding material and the appearance layer 210 is increased, and connection stability between the appearance layer 210 and the structure layer 220 is increased. In addition, uniformity of T treatment can be further increased, and ease of corrosion during T treatment can also be improved.

When the material of the appearance layer 210 is a material such as titanium alloy, stainless steel, or amorphous zirconium, a dense metal-oxide thin film may be formed on a surface of the appearance layer 210. Therefore, the dense metal-oxide thin film needs to be removed in a T treatment process, so that the appearance layer 210 can be closely combined with the structure layer 220. In addition, a plurality of nanopores may be further obtained on the surface of the appearance layer 210 through corrosion. In an injection molding process, the injection molding material may flow into these nanopores. In other words, some injection molding materials may penetrate into the appearance layer 210, so that sealing performance and the connection stability between the appearance layer 210 and the structure layer 220 is improved.

It should be noted that, when net shaping or near-net shaping of the metal appearance layer 210 is implemented, the wall thickness of the appearance layer 210 usually ranges from 0.3 mm to 0.5 mm. In this way, the appearance layer 210 is prone to deform in the NMT injection molding process. Consequently, after the NMT injection molding is performed, the appearance layer 210 generates plastic deformation or elastic deformation under an extremely large injection molding pressure. For this problem, during NMT injection molding, parts at four positions, positions of 3 o'clock, 6 o'clock, 9 o'clock, and 12 o'clock, of the appearance layer 210 may implement zero-gap fit with the appearance layer 210 by using sliders or inserts. In other words, the appearance layer 210 is supported in the x direction or the y direction by using molds, to resolve a deformation problem. A preparation process between the appearance layer 210 and the structure layer 220 may be set based on a specific situation, and is not further described in this embodiment of this application.

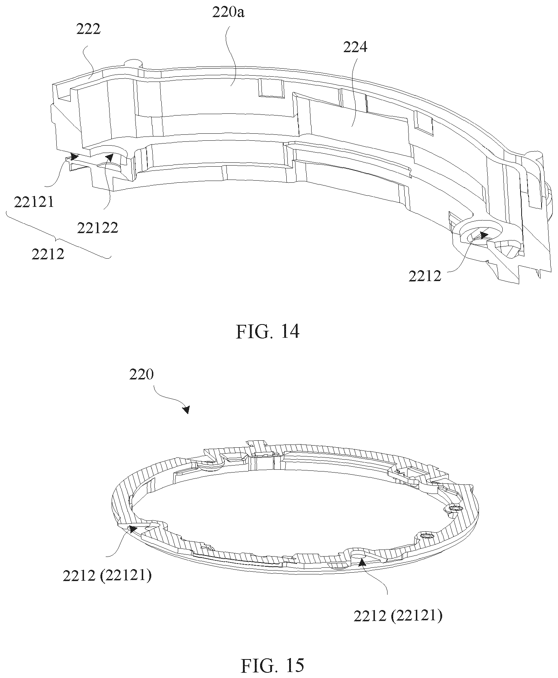

FIG. 13 is a diagram of a structure of the structure layer of the middle frame assembly of the device body of the electronic device according to an embodiment of this application. FIG. 14 is a diagram of a cross-sectional structure of the structure layer of the middle frame assembly of the device body of the electronic device according to an embodiment of this application. FIG. 15 is a diagram of another cross-sectional structure of the structure layer of the middle frame assembly of the device body of the electronic device according to an embodiment of this application. FIG. 13, FIG. 14, and FIG. 15 are all diagrams of structures of a rear side of the structure layer 220.

As shown in FIG. 13, the structure layer 220 includes the annular wall 220a disposed in the thickness direction of the middle frame assembly 200. A surface that is of the annular wall 220a and that faces the inside of the middle frame assembly 200 is the inner wall of the structure layer 220, and a surface that is of the annular wall 220a and that is away from the inside of the middle frame assembly 200 is the outer wall of the structure layer 220. In this embodiment, a plurality of assembly structures 224 are disposed on the inner wall of the structure layer 220, and the plurality of assembly structures 224 are distributed around circumference of the structure layer 220. The plurality of assembly structures 224 may be configured to be assembled with an unused component of the bottom case assembly 500, the battery assembly 300, or the control assembly 400, so that a battery group and the control assembly 400 can be fastened to the middle frame assembly 200.

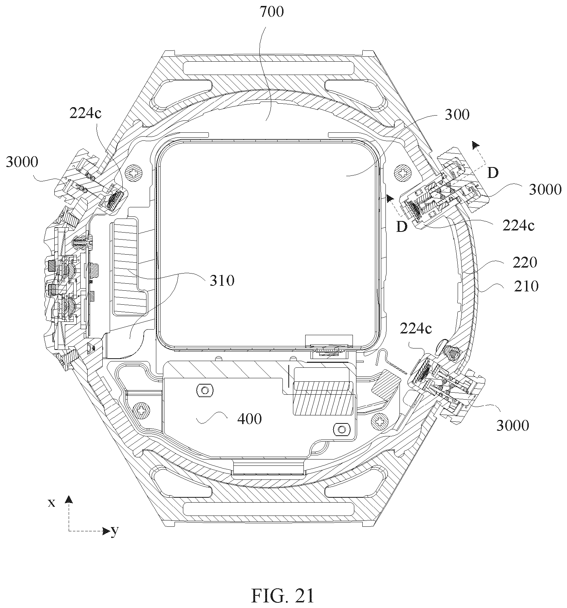

It should be noted that the plurality of assembly structures 224 may be assembled with different components, for example, may be assembled with the battery assembly 300 or the control assembly 400. Therefore, shapes and structures of the plurality of assembly structures 224 may be different. For example, the plurality of assembly structures 224 may include hole-shaped structures 224a disposed on the inner wall of the structure layer 220. During assembly, the hole-shaped structure 224a may be connected to a fastener 612 such as a screw. The assembly structure 224 may alternatively be a groove-shaped structure 224b formed on the inner wall of the structure layer 220. The assembly structure 224 may alternatively be an annular wall structure 224c formed on the inner wall of the structure layer 220. For example, the annular wall structure 224c may be disposed at a position on which the button assembly 3000 is disposed. For example, a cross section of the annular wall structure 224c may be in a U shape (as shown in FIG. 21). The annular wall structure 224c is disposed at the position on which the button assembly 3000 is disposed, to facilitate mounting of the button assembly 3000, and further isolate a metal component in the structure layer 220 and the appearance layer 210, so that a metal component located on the inner side of the structure layer 220 is prevented from affecting an antenna characteristic of the appearance layer 210.

Because the structure layer 220 is a structure made of an insulating material, the structure layer 220 may be configured to isolate the appearance layer 210 from metal components of the battery assembly 300 and the control assembly 400 that are located inside the middle frame assembly 200, to prevent metal components in the electronic device 10000 from affecting performance of an antenna radiator. In other words, the insulating structure layer 220 is disposed, so that a clearance requirement of the antenna radiator can be met, and performance of an antenna can be ensured.

It should be noted that specific shapes and disposition positions of the plurality of assembly structures 224 may be specifically set based on a specific situation, and are not further described in this embodiment. Only some of the assembly structures 224 on the inner wall of the structure layer 220 are marked in the figure. Because there are a large quantity of assembly structures 224 on the inner wall of the structure layer 220 and the shapes are different, the assembly structures 224 are not marked one by one.

In some embodiments, an inner edge 223 protruding outward around the circumference of the structure layer 220 is provided on the inner wall of the structure layer 220, and the mounting portion 221 is disposed on the inner wall of the structure layer 220. A quantity of mounting portions 221 corresponds to the quantity of connection portions 211. In other words, the quantity and a position of the mounting portions 221 correspond to those of the connection portions 211. In this embodiment of this application, the quantity and the position of the mounting portions 221 are not described again.

With reference to FIG. 14 and FIG. 15, the mounting portion 221 includes a mounting cavity 2212. The mounting cavity 2212 is configured to accommodate the connection portion 211, and a structure of the mounting cavity 2212 corresponds to that of the connection portion 211. The mounting cavity 2212 includes a first cavity 22121 and a second cavity 22122 that communicate with each other. The first connection segment 2111 is located in the first cavity 22121, and is connected to the first cavity 22121 in a sealed manner. The second cavity 22122 is a stepped cylindrical cavity. A large end of the stepped cylindrical cavity is located at an end that is of the second cavity 22122 and that is away from the first cavity 22121. A partial structure of the second connection segment 2112 passes through a small end of the stepped cylindrical cavity, and is connected to the small end of the stepped cylindrical cavity in a sealed manner. The other partial structure of the second connection segment 2112 is located at the large end of the stepped cylindrical cavity, and the first groove 2211 is formed between the other partial structure of the second connection segment 2112 and the large end of the stepped cylindrical cavity. The first sealing member 230 is disposed in the first groove 2211, and the first sealing member 230 is connected to the first groove 2211 in a sealed manner.

An example in which the first connection segment 2111 of the connection portion 211 is of the sector structure is used for description. The mounting cavity 2212 includes the first cavity 22121 corresponding to the first connection segment 2111. For example, the first cavity 22121 is a sector cavity. The mounting cavity 2212 further includes the second cavity 22122 corresponding to the second connection segment 2112. For example, the second cavity 22122 is a columnar cavity. The columnar cavity includes a stepped hole, and the sector cavity communicates with the columnar cavity. The first connection segment 2111 is located in the first cavity 22121, the second connection segment 2112 is located in the second cavity 22122, and the first groove 2211 is formed between the outer side of the second connection segment 2112 and an outer wall of the second cavity 22122.

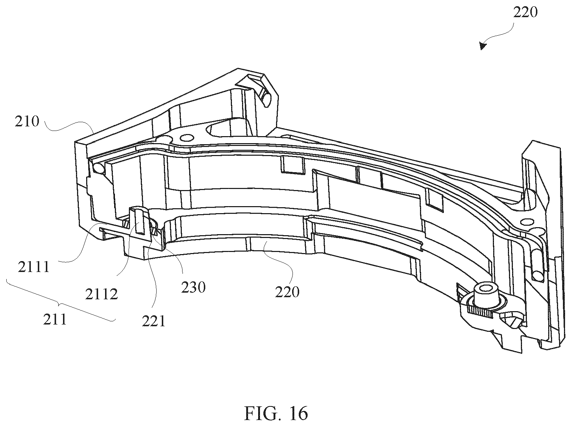

As shown in FIG. 16, when the connection portion 211 is mounted in the mounting cavity 2212 of the mounting portion 221, the first groove 2211 may be formed between the mounting portion 221 and the connection portion 211 (as shown in FIG. 5), and the first sealing member 230 may be disposed in the first groove 2211. In this embodiment of this application, the structure of the mounting cavity 2212 corresponds to that of the connection portion 211. In other words, the structure of the mounting cavity 2212 is formed through NMT injection molding. Therefore, a shape of the structure of the mounting cavity 2212 matches a shape of the structure of the connection portion 211. In this case, the structure of the mounting cavity 2212 is not further described in this embodiment of this application.

It should be noted that a plurality of mounting portions 221 configured to mount the button assembly 3000 are further disposed on the appearance layer 210. A shape, a structure, and the disposition position of the mounting portion 221 on the appearance layer 210 are not further described in this embodiment of this application.

In the middle frame assembly 200 provided in this embodiment of this application, the appearance layer 210 is disposed as the metal material, and the structure layer 220 is disposed as the insulating material, so that the middle frame assembly 200 can be used as the antenna radiator, and can also be assembled with the control assembly 400, the battery assembly 300, or the like that is located in the electronic device 10000. In addition, the connection portion 211 embedded into the structure layer 220 is disposed on the inner side of the appearance layer 210, so that, during assembly with the control assembly 400 and the battery assembly 300, a position at which the appearance layer 210 is electrically connected to the control assembly 400 is provided, and it is ensured that other metal components on the control assembly 400 and the battery assembly 300 are all isolated from the appearance layer 210 through the structure layer 220. It is ensured that the appearance layer 210 can be used as the antenna radiator. In addition, clearance of the antenna radiator can be ensured. Therefore, the performance of the antenna is improved.

The following describes connection relationships between the middle frame assembly 200 and between the control assembly 400 and the battery assembly 300 with reference to the accompanying drawings.

FIG. 17 is a diagram of a partial cross-sectional structure of the device body of the electronic device according to an embodiment of this application. FIG. 17 is a diagram of a cross-sectional structure at a position at which the connection portion is disposed on the middle frame assembly.

As shown in FIG. 17, the panel assembly 100 of the device body 1000 may include the bezel 120 and the display panel 110. The bezel 120 may be connected to the structure layer 220 of the middle frame assembly 200 in a sealed manner, and the bezel 120 is connected to the display panel 110 in a sealed manner. The control assembly 400 includes the circuit board 410. The circuit board 410 is fastened and electrically connected to the connection portion 211 of the appearance layer 210, so that the antenna radiator (the appearance layer 210) can implement signal conduction.

For example, the first connection assembly 610 is disposed between the connection portion 211 and the circuit board 410. The first connection assembly 610 may include a spring 611 and the fastener 612. One end of the spring 611 is connected to the circuit board 410, and the other end is connected to the fastener 612. The fastener 612 is fastened in a hollow of the second connection segment 2112 of the connection portion 211, and the circuit board 410 is fastened to the middle frame assembly 200. In this embodiment, both the fastener 612 and the spring 611 of the first connection assembly 610 are of metal structures and can be conductive. Therefore, after the circuit board 410 is connected to the appearance layer 210 through the first connection assembly 610, an electrical signal on the circuit board 410 may be transferred to the appearance layer 210, so that the appearance layer 210 can implement signal conduction.

In addition, a dashed line with an arrow in FIG. 17 is the first waterproof interface between the appearance layer 210 and the structure layer 220. As shown in FIG. 17, there is the first waterproof interface between the structure layer 220 and the appearance layer 210, and the second waterproof interface is formed between the first sealing member 230, the second connection segment 2112, and the mounting portion 221 (that is, connection surfaces of the first sealing member 230 and the first groove 2211, which is not marked in the figure). The first waterproof interface and the second waterproof interface are disposed, so that the waterproof effect can still be implemented by using the second waterproof interface when a problem occurs on the first waterproof interface. In addition, the groove-type pulling-resisted bonding structure on the appearance layer 210 may extend a path of the first waterproof interface. In this way, liquid may be attached to a surface of the waterproof path in the poor waterproof path, and cannot reach the inside of the electronic device 10000. Therefore, the waterproof effect is improved.

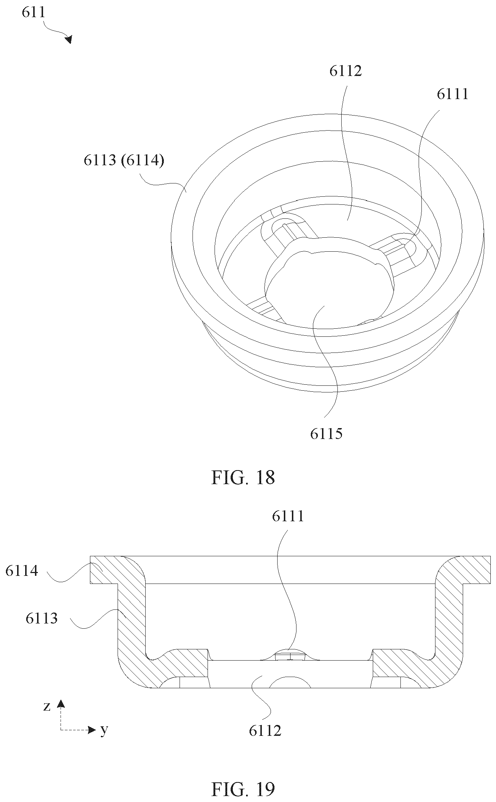

FIG. 18 is a diagram of a structure of the spring in the first connection assembly of the device body of the electronic device according to an embodiment of this application. FIG. 19 is a diagram of a cross-sectional structure of the spring in the first connection assembly of the device body of the electronic device according to an embodiment of this application.

With reference to FIG. 17, FIG. 18, and FIG. 19, the spring 611 is of a bowl-shaped structure, the spring 611 includes a side wall 6113 and a bottom wall 6112, the side wall 6113 surrounds an outer side of the bottom wall 6112, and the side wall 6113 is disposed in the direction of the central axis of the middle frame assembly 200. One end that is of the side wall 6113 and that is away from the bottom wall 6112 is provided with a flange 6114 that extends outward in a radial direction of the bottom wall 6112. For example, a surface that is of the flange 6114 and that is away from the bottom wall 6112 is of a planar structure, to help abut against the circuit board 410.

A middle portion of the bottom wall 6112 is provided with a through hole 6115 for the fastener 612 to insert. During assembly, the fastener 612 passes through the through hole 6115 and is securely connected to the second connection segment 2112 of the connection portion 211. The surface that is of the flange 6114 and that is away from the bottom wall 6112 abuts against the circuit board 410, and the circuit board 410 is fastened to the structure layer 220 of the middle frame assembly 200. The flange 6114 is disposed, so that a contact area between the spring 611 and the circuit board 410 can be increased. Therefore, connection stability between the circuit board 410 and the connection portion 211 can be improved.

As shown in FIG. 19, a plurality of bumps 6111 are further provided on a surface that is of the bottom wall 6112 of the spring 611 and that faces the flange 6114, and the bump 6111 protrudes, in a direction close to the flange 6114, from the surface that is of the bottom wall 6112 and that faces the flange 6114. During assembly, the bump 6111 is connected to the second connection segment 2112 of the connection portion 211. For example, a conductive layer may be disposed on a surface of the bump 6111, and the conductive layer may be gold-plated, silver-plated, or the like. In this way, conductive efficiency between the spring 611 and the connection portion 211 can be increased. Therefore, performance of the appearance layer 210 as the antenna radiator can be improved.

It should be noted that, a quantity of the bumps 6111 in the spring 611 and disposition positions of the bumps 6111 are not further limited in this embodiment of this application.

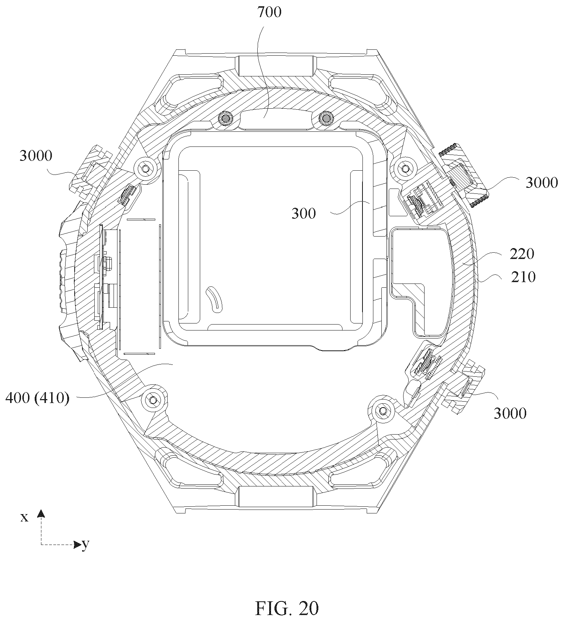

FIG. 20 is a diagram of a cross-sectional structure of the device body 1000 of the electronic device 10000 according to an embodiment of this application. FIG. 21 is a diagram of another cross-sectional structure of the device body 1000 of the electronic device 10000 according to an embodiment of this application.

As shown in FIG. 20 and FIG. 21, in this embodiment of this application, the appearance layer 210 includes an antenna radiator of the electronic device 10000. The structure layer 220 is disposed between the appearance layer 210 and the device body 1000 of the electronic device 10000. The structure layer 220 is configured to provide antenna clearance for the antenna radiator.

In other words, the structure layer 220 may isolate the appearance layer 210 from the control assembly 400 and the battery assembly 300 that are located in the accommodation cavity, to isolate metal structures of the battery assembly 300 and the control assembly 400 from the appearance layer 210, so that antenna clearance is provided for the appearance layer 210, and working efficiency of the appearance layer 210 as the antenna radiator is improved.

With reference to the accompanying drawings, the following describes a specific structure in which the structure layer 220 provides the antenna clearance for the appearance layer 210.

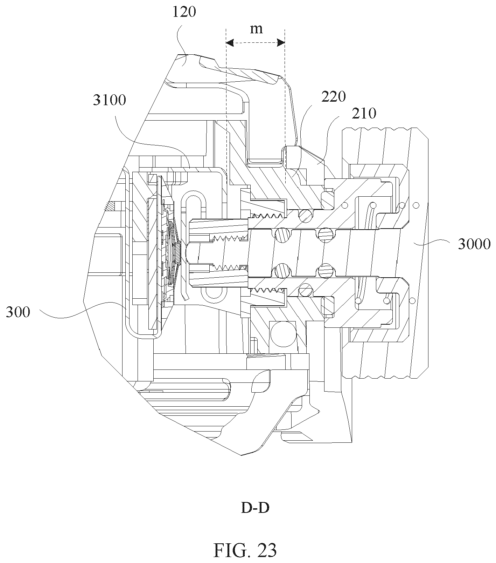

FIG. 22 is a diagram of a partial cross-sectional structure of the device body of the electronic device according to an embodiment of this application. FIG. 23 is a diagram of a partial cross-sectional structure along D-D in FIG. 21. FIG. 22 is a diagram of a cross-sectional structure at a connection of the battery bracket of the battery assembly. FIG. 23 is a diagram of a cross-sectional structure of the button assembly.

As shown in FIG. 22, the battery bracket 320 is fastened to the structure layer 220 through the second connection assembly 620. The hole-shaped structure 224a that fits with the second connection assembly 620 is provided on the structure layer 220, and there is antenna clearance with a width of m between the appearance layer 210 and the second connection assembly 620, to prevent a metal component inside the middle frame assembly 200 from interfering with the antenna.

As shown in FIG. 23, at the button assembly 3000, the structure layer 220 is disposed between the appearance layer 210 and a crown spring 3100 of the button assembly 3000. The crown spring 3100 may be a metal component, the crown spring 3100 is fastened to the structure layer 220, and the button assembly 3000 may control a working status of the battery assembly 300 by using the crown spring 3100. It should be noted that, how the crown spring 3100 specifically controls the working status of the battery assembly 300 is not further limited in this embodiment of this application.

A partial structure of the structure layer 220 is located between the crown spring 3100 and the appearance layer 210, so that antenna clearance with a width of m is formed between the crown spring 3100 and an appearance, to prevent the metal component inside the middle frame assembly 200 from interfering with the antenna.

In the middle frame assembly 200 provided in this embodiment of this application, the appearance layer 210 is disposed as the metal appearance layer 210, and the structure layer 220 is disposed as the insulating structure layer 220, so that the appearance layer 210 can be isolated from the metal component inside the electronic device 10000. Therefore, the antenna clearance is ensured, and the performance of the antenna is improved. In addition, the structure layer 220 is formed on the inner side of the appearance layer 210 through NMT injection molding, and the first sealing member 230 is disposed at a position at which the structure layer 220 is connected to the appearance layer 210, so that the waterproof effect of the middle frame assembly 200 can be improved. Therefore, the waterproof performance of the electronic device 10000 can be improved, and both the appearance effect and the texture are good.

It should be understood that, in this application, an "electrical connection" may be understood as physical contact and electrical conduction of components, or may be understood as a form in which different components in a line structure are connected through physical lines that can transmit an electrical signal, such as a printed circuit board (printed circuit board, PCB) copper foil or a conducting wire. "Fastened and electrically connected" may be understood as a physically fixed connection between components, and can be electrically conductive.

In descriptions of embodiments of this application, it should be noted that, unless otherwise clearly specified and limited, terms "mount", "link", and "connect" should be understood in a broad sense. For example, the connection may be a fixed connection, may be an indirect connection through a medium, may be an internal communication between two components, or may be an interaction relationship between two components. A person of ordinary skill in the art may understand specific meanings of the foregoing terms in embodiments of this application based on a specific situation.

In this specification, claims, and accompanying drawings of embodiments of this application, terms "first", "second", "third", "fourth", and the like (if existent) are intended to distinguish between similar objects but do not necessarily indicate a specific order or sequence.

## Claims

1. An electronic device, comprising a panel assembly, a middle frame assembly, and a bottom case assembly, wherein the panel assembly and the bottom case assembly are respectively disposed at a top end and a bottom end of the middle frame assembly, an accommodation cavity is formed between the panel assembly, the middle frame assembly, and the bottom case assembly, and a battery assembly and a control assembly are disposed in the accommodation cavity; and
the middle frame assembly comprises an appearance layer and a structure layer, wherein the appearance layer is a metal appearance layer, the appearance layer comprises an annular wall structure that extends in a thickness direction of the middle frame assembly, and at least one connection portion that extends toward the inside of the accommodation cavity is disposed on an inner wall of the appearance layer;
the structure layer is an insulating structure layer, the structure layer comprises an annular wall disposed around the inner wall of the appearance layer, and the battery assembly is fastened to the structure layer;
a mounting portion that fits with the connection portion is disposed on the structure layer, one end of the connection portion penetrates into the mounting portion, and the other end is exposed from the mounting portion; and
the control assembly comprises a circuit board, and the circuit board is fastened and electrically connected to a part that is of the connection portion and that is exposed from the mounting portion.

2. The electronic device according to claim 1, wherein the structure layer is formed on the inner wall of the appearance layer by using a nano molding technology, and a first waterproof interface is formed between injection molding connection surfaces of the structure layer and the appearance layer.

3. The electronic device according to claim 1 or 2, wherein a first groove is provided between a partial structure of the connection portion and the mounting portion on a side that is of the connection portion and that is exposed from the mounting portion; and
a first sealing member is disposed in the first groove, the first sealing member is connected to the first groove in a sealed manner, and a second waterproof interface is formed between connection surfaces of the first sealing member and the first groove.

4. The electronic device according to claim 3, wherein the first sealing member is of an annular structure formed in the first groove by using a dispensing process; or
the first sealing member is of an annular sealing ring structure, and the annular sealing ring structure is in interference fit with the first groove.

5. The electronic device according to claim 3 or 4, wherein the connection portion comprises a first connection segment and a second connection segment;
one end of the first connection segment is connected to the inner wall of the appearance layer, and the other end extends toward the inside of the appearance layer; and
one end of the second connection segment is connected to an end that is of the first connection segment and that is away from the appearance layer, and the other end extends away from the first connection segment in a thickness direction of the appearance layer.

6. The electronic device according to claim 5, wherein the connection portion is of an L-shaped structure; and
the first connection segment is perpendicular to the appearance layer, and the first connection segment is perpendicular to the second connection segment.

7. The electronic device according to claim 5 or 6, wherein the first connection segment is of a sector structure; and
a large end of the sector structure is connected to the inner wall of the appearance layer, and a small end of the sector structure is connected to the second connection segment.

8. The electronic device according to claim 7, wherein the second connection segment is of a hollow column structure.

9. The electronic device according to claim 8, wherein the second connection segment is internally threaded.

10. The electronic device according to any one of claims 7 to 9, wherein a central angle corresponding to the sector structure ranges from 30° to 60°, and a thickness of the sector structure is greater than or equal to 0.5 mm.

11. The electronic device according to any one of claims 6 to 10, wherein the mounting portion comprises a mounting cavity, and the mounting cavity comprises a first cavity and a second cavity that communicate with each other;
the first connection segment is located in the first cavity, and is connected to the first cavity in a sealed manner; and
the second cavity is a stepped cylindrical cavity, wherein
a large end of the stepped cylindrical cavity is located at an end that is of the second cavity and that is away from the first cavity, and a partial structure of the second connection segment passes through a small end of the stepped cylindrical cavity, and is connected to the small end of the stepped cylindrical cavity in a sealed manner;
the other partial structure of the second connection segment is located at the large end of the stepped cylindrical cavity, and the first groove is formed between the other partial structure of the second connection segment and the large end of the stepped cylindrical cavity; and
the first sealing member is disposed in the first groove, and the first sealing member is connected to the first groove in a sealed manner.

12. The electronic device according to any one of claims 8 to 11, wherein the circuit board is located on a surface that is of the connection portion and that is exposed from the mounting portion, the circuit board is provided with a through hole that fits with the connection portion, and the part that is of the connection portion and that is exposed from the mounting portion passes through the through hole, so that a surface that is of the circuit board and that is close to the mounting portion abuts against the mounting portion;
the electronic device further comprises a first connection assembly, wherein the first connection assembly comprises a spring and a fastener, and both the fastener and the spring are of metal structures; and
one end of the fastener passes through the spring and is fastened to the second connection segment of the connection portion, so that one end of the spring abuts against the circuit board, and a surface that is of the other end and that faces the connection member abuts against the connection member, and the spring is fastened between the connection portion and the fastener.

13. The electronic device according to claim 12, wherein the spring is of a bowl-shaped structure, wherein
the spring comprises a side wall and a bottom wall, the side wall surrounds an outer side of the bottom wall, and the bottom wall is provided with a through hole for the fastener to be inserted into; and
a plurality of bumps are provided on a surface that is of the bottom wall and that is close to the side wall, and the bumps abut against the connection portion.

14. The electronic device according to claim 13, wherein a conductive layer is disposed on a surface of the bump, and the conductive layer is gold-plated or silver-plated.

15. The electronic device according to any one of claims 1 to 14, wherein there are a plurality of connection portions, wherein
the plurality of connection portions are spaced apart around circumference of the appearance layer; and
the connection portion corresponds to the mounting portion.

16. The electronic device according to any one of claims 1 to 15, wherein the appearance layer comprises an antenna radiator of the electronic device; and
the structure layer is located between the antenna radiator and the accommodation cavity, and the structure layer is configured to provide antenna clearance for the antenna radiator.

17. The electronic device according to any one of claims 1 to 16, wherein in the thickness direction of the middle frame assembly, at least one gap structure is provided at a top end or a bottom end of the appearance layer; and
the at least one gap structure is spaced apart around the circumference of the appearance layer.

18. The electronic device according to any one of claims 1 to 17, wherein the appearance layer is formed through forging, casting, or die casting.

19. The electronic device according to any one of claims 1 to 18, wherein a plurality of pulling-resisted bonding structures are disposed on the inner wall of the appearance layer; and
the pulling-resisted bonding structure is of a hole-type pulling-resisted bonding structure or a groove-type pulling-resisted bonding structure.
